# EUROPÄISCHE PATENTANMELDUNG

(11) **EP 1 618 853 A1**
(43) Veröffentlichungstag der Anmeldung: **25.01.2006**
(21) Anmeldenummer: 05106657.9
(22) Anmeldetag: 20.07.2005
(51) Int. Cl.: A61C 13/00, A61C 8/00

(54) **Ausgleichsteil und Verfahren für die Vermessung von Zahnrestaurationen**

(30) Priorität: 20.07.2004 DE 102004035090
(71) Anmelder: Sirona Dental Systems GmbH, 64625 Bensheim (DE)
(72) Erfinder: Saliger, Günter, 64625, Bensheim (DE)
(74) Vertreter: Sommer, Peter

(57) **Zusammenfassung**

Die Erfindung betrifft ein Ausgleichsteil für die Vermessung von Zahnrestaurationen mit einem auf ein in einem Kiefer eingebrachtes Implantat (4) oder auf ein in einem Arbeitsmodell vorgesehenes Manipulierimplantat befestigten Aufsatzteil (6).

Das Ausgleichsteil (7) weist eine das Aufsatzteil (6) umfangsseitig umschließende Öffnung (11) auf und es sind sich von der Öffnung (11) weg erstreckende Auflageflächen (12, 13) zur Auflage auf dem die Zahnrestauration umgebenden Zahnfleisch (5) vorgesehen.

## Beschreibung

### Technisches Gebiet

Die Erfindung betrifft das Gebiet der prothetischen Versorgung mit zahnärztlichen Implantaten und insbesondere ein Ausgleichsteil für die Vermessung von Zahnrestaurationen mit einem auf ein in einem Kiefer eingebrachtes Implantat oder auf ein in einem Arbeitsmodell vorgesehenes Manipulierimplantat befestigten Aufsatzteil.

### Stand der Technik

Die prothetische Versorgung von zahnärztlichen Implantaten ist heute eine Aufgabe, die der Zahnarzt zusammen mit seinem Dentallabor löst. Die obere Kante eines enossalen zahnärztlichen Implantats liegt typisch in etwa auf der

Höhe des Kieferknochens oder schließt mit ihm bündig ab.

Die Oberkante des Implantats liegt darüber hinaus in einem Bereich, der regelmäßig von Speichel und anderen Körperflüssigkeiten umspült wird und in dem Drüsen liegen, die verschiedene Sekrete erzeugen. Damit ist es schwierig, den Kopf des Implantats so trocken zu halten, dass er direkt im Mund des Patienten vermessen werden kann.

Der Implantatkopf ist regelmäßig so konzipiert, dass eine mechanisch hochwertige Verbindung mit geringem Spiel, hoher Passung und gutem Kraftschluss zu der Suprastruktur bzw. einem Abutment entsteht. Das ergibt geometrische Ausgestaltungen am Implantatkopf, die z. B. mit herkömmlichen intraoralen Messverfahren nur schwer in der erforderlichen Genauigkeit vermessen werden könnten. Dies gilt insbesondere dann, wenn der Implantatkopf gepudert wird.

Das Problem wird durch einen ungleichmäßigen Puderauftrag noch verstärkt.

Das Implantat ist von Gingiva bzw. Knochensubstanz umgeben. Beide Oberflächen können nur unter Schwierigkeiten so bepudert werden, dass sie nach mit herkömmlichen intraoralen Messverfahren vermessen werden können.

Aus der EP-A2-1 062 916 ist ein Verfahren zur Herstellung eines Zahnersatzes sowie ein Verfahren zur Herstellung eines Zahnersatzteiles bekannt, welches von der Erstellung eines Negativabdruckes des Kiefers ausgeht und anhand eines daraus hergestellten Arbeitsmodells das Setzen und Vermessung von Implantaten zur Konstruktion von Gerüsten ermöglicht. Die dort gegebenen Definitionen und Beschreibungen des grundsätzlichen Ablaufes zur Vorbereitung einer Vermessung bzw. zur anschließenden Konstruktion und Herstellung werden vollumfänglich in die vorliegende Anmeldung mit einbezogen.

Das dort beschriebene Verfahren beruht darauf, dass in einen konventionellen Abdruck ein sogenanntes ManipulierImplantat eingebracht wird und damit auf dem Modell eine Situation hergestellt wird, wie sie bereits im Mund des Patienten nach der Inkorporation des Implantats vorliegt. Diese klinische Situation wird dann mit Hilfe eines Scanners vermessen mit dem Ziel, Abutment und Suprastruktur herzustellen. Zur Lagebestimmung des Implantats wird ein Hilfselement verwendet.

Mit diesem Verfahren werden die Arbeiten, die der Zahntechniker auch heute schon nach dem Stand der Technik ausführen muss, computerisiert, d.h. die zu erstellenden Zwischenstufen Modellierung von Abutment, Gerüst und Verblendung werden digitalisiert, um sie hinterher auszuschleifen.

Nachteilig hierbei ist, dass die vorgeschlagenen Verfahren eine Trennung zwischen der Tätigkeit des Zahnarztes am Patienten selbst und in die Tätigkeit eines Zahntechnikers an einem Modell erfordern. Eine Anwendung der Verfahren am Patienten selbst ist nicht möglich.

Aufgabe der Erfindung ist es, ein Verfahren und eine Vorrichtung anzugeben, mit der es möglich wird die Konstruktion und Herstellung der benötigten Suprastrukturen direkt und sofern gewünscht unmittelbar am Patienten ohne Einschaltung eines Dentallabors bzw. Zahntechnikers mit einem CAD/CAM-Gerät auszuführen oder die notwendigen Arbeitsschritte des Zahntechnikers rationeller als bisher zu gestalten.

### Darstellung der Erfindung

Mit dem in Anspruch 1 beschriebenen erfindungsgemäßen Ausgleichsteil wird diese Aufgabe gelöst. Darüber hinaus wird mit dem in Anspruch 7 vorgeschlagenen Verfahren die Anwendung des Ausgleichsteils und in Anspruch 8 die Umsetzung zusammen mit einem Aufsatzstück beansprucht.

Das Ausgleichsteil für die Vermessung von Zahnrestaurationen mit einem auf ein in einem Kiefer eingebrachten Implantat oder mit einem auf ein in einem Arbeitsmodell vorgesehenes Manipulierimplantat befestigten Aufsatzteil weist eine das Aufsatzteil umfangsseitig umschließende Öffnung auf, wobei sich von der Öffnung weg erstreckende Auflageflächen zur Auflage auf dem die Zahnrestauration umgebenden Zahnfleisch vorgesehen sind.

Wesentlich ist, dass die Auflageflächen des Ausgleichsteils auf einem Bereich des Zahnfleischs aufliegen, der als gesunde oder als gewünschte Kontur angesehen wird. Die Auflageflächen müssen also den Bereich zwischen der eigentlichen Auflage und dem Aufsatzteil des Implantats überspannen.

Vorteilhafterweise ist der Rand der Öffnung des Ausgleichsteils als Dichtung ausgebildet oder ist an der Öffnung eine Dichtung angeordnet. Damit wird das Austreten von Blut und Speichel an die Oberseite des Ausgleichsteils verhindert und eine korrekte Vermessung begünstigt.

Gemäß einer Weiterbildung ist der Rand der Öffnung so ausgebildet, dass eine Verschiebung des Ausgleichsteils entlang des und/oder eine Verdrehung gegenüber dem Aufsatzteil ermöglicht ist. Dadurch ist das Ausgleichsteil in seiner Orientierung bezüglich des Aufsatzteils einstellbar.

Vorteilhafterweise ist eine Kennung vorhanden, die eine Bestimmung der Orientierung des Ausgleichsteils bezüglich des Aufsatzteils ermöglicht.

Zur weiteren Verbesserung der Vermessung kann die dem Kiefer abgewandte Oberfläche einen hohen Rückstreukoeffizienten mit einer Lambert'schen Streuverteilung sowohl im sichtbaren wie im nahen Infrarotbereich des Spektrums aufweisen. Dabei kann die die Oberfläche beschichtet sein.

Mit einem Verfahren zur Vermessung von einem in einen Kiefer eingebrachten Implantat oder von einem in einem Arbeitsmodell vorgesehenen Manipulierimplantat, wobei an einem Implantat oder Manipulierimplantat ein Aufsatzteil positioniert und befestigt ist und wobei das Aufsatzteil die Lage des Implantates im Kieferbereich wiedergibt, lassen sich dann Verbesserungen in der Handhabung erreichen, wenn ein am Aufsatzteil beweglich angeordnetes Ausgleichsteil auf das Niveau der Gingiva ausgerichtet wird und wenn die Erstellung eines dreidimensionalen Datensatzes für die Erstellung der Suprastruktur unter Berücksichtigung des derartig ausgerichteten Ausgleichsteils erfolgt.

An die Stelle der tatsächlichen Geometrie im Bereich des Implantats, die außerhalb des Messbereichs der Messkamera liegen kann, tritt dann die idealisierte Geometrie des Ausgleichsteils.

Ein Aufsatzteil auf ein in einem Kiefer eingebrachtes Implantat oder ein in einem Arbeitsmodell vorgesehenes Manipulierimplantat, wobei das Aufsatzteil mit einer Positionierungsvorrichtung und mit Befestigungsmitteln zum Implantat hin und weiterhin Teilbereichen, die in Ihrer Struktur und/oder Codierung insbesondere einem CAM-Gerät bekannt sind, kann dadurch verbessert werden, dass zwischen der Positionierungsvorrichtung und den Teilbereichen ein Distanzstück vorgesehen ist, dessen Länge so bemessen ist, dass ein Ausgleichsteil auf das Niveau des Zahnfleisches der Nachbarzähne gebracht ist.

Dadurch wird erreicht, dass der Messbereich der Messkamera auch bei defektem Zahnfleisch im Bereich der Präparation nicht verlassen wird und dass die Konstruktion des Zahnersatzteils oder der Suprastruktur dem idealisierten Verlauf des Zahnfleisches angepasst werden kann.

### Kurzbeschreibung der Zeichnung

In der Zeichnung ist ein Ausführungsbeispiel der Erfindung dargestellt. Es zeigt die:
- Fig. 1: eine typische Präparationsstelle für eine Zahnrestauration mit einem erfindungsgemäßen Ausgleichsteil im Schnitt entlang der Linie AA aus Fig. 2; die
- Fig. 2: ein erfindungsgemäßes Ausgleichsteil 7 in einer perspektivischen Ansicht; die
- Fig. 3: eine typische Präparationsstelle für eine Zahnrestauration im Schnitt entlang der Linie BB aus Fig. 2.

### Ausführungsbeispiel

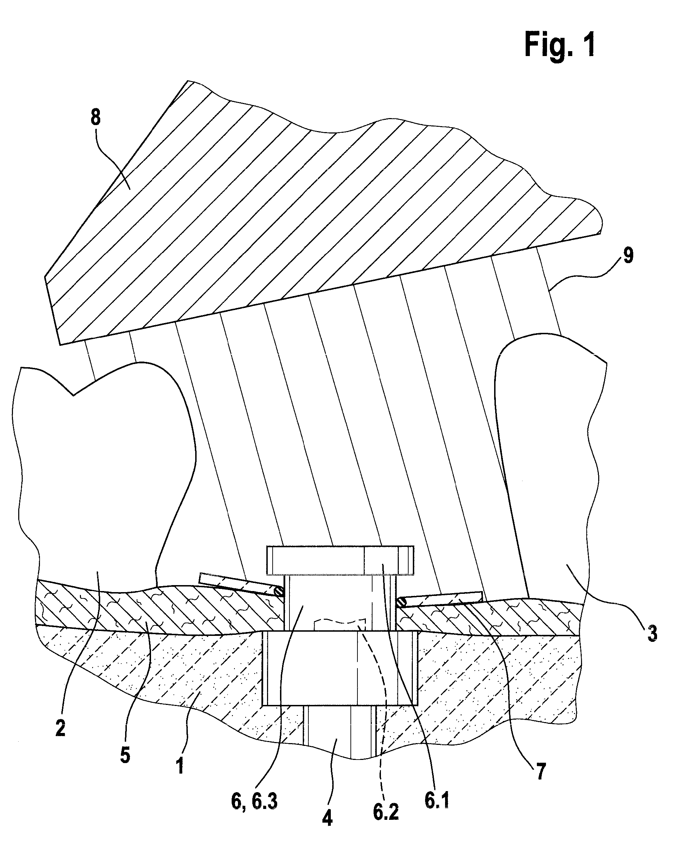

In Fig. 1 ist eine typische Präparationsstelle für eine Zahnrestauration dargestellt. In einen Kieferknochen 1 mit zu erhaltenden Zähnen 2, 3 ist zwischen den Zähnen 2, 3 ein Implantat 4 eingesetzt. Der Kieferknochen 1 wird überdeckt von Zahnfleisch 5, welches im Bereich des Implantats 4 von einem mit dem Implantat 4 über eine dazwischenliegende Passfläche als Bestandteil eines Positioniervorrichtung 6.1 verbundenen Aufsatzteil 6 durchbrochen ist.

Die Passfläche des Implantats ist regelmäßig so ausgebildet, dass ein guter Kraftschluss sowie eine relative Verdrehsicherheit gegeben sind und dass die notwendigen hygienischen Erfordernisse berücksichtigt sind. Historisch haben sich verschiedene Passflächen herausgebildet. Die Gegenstücke zu diesen Flächen werden nachgebildet und sind Bestandteil des Aufsatzteils 6.

Das Aufsatzteil 6 dient als Verschiebebahn für ein das Aufsatzteil umgebendes Ausgleichsteil 7, welches der Bestimmung und der Festlegung des Niveaus des Zahnfleischs (Gingiva-Niveau) dient. Es ist transversal an dem Aufsatzteil 6 entlang beweglich und kann nach dem Trennen des Aufsatzteils 6 vom Implantat 4 ausgewechselt werden. Das Ausgleichsteil kann als Gingiva-Teller bezeichnet werden und ist in seiner Orientierung flexibel einstellbar.

Das bewegliche Ausgleichsteil 7 befindet sich innerhalb des Schärfentiefebereichs einer intraoralen Messkamera 8, von welcher nur der vorderste Bereich mit der aus einem Messfenster austretenden Messstrahlung 9 dargestellt ist. Die Lage und die Orientierung des Ausgleichsteils 7 wird aus den gemessenen Daten gewonnen.

An dem Aufsatzteil 6 ist weiterhin ein Teilbereich 6.1 vorgesehen, der in seiner Struktur und/oder Codierung einem CAM-Gerät bekannt ist und der bei der Vermessung Rückschlüsse auf die Lage und Orientierung des Implantats zulässt. Unter CAM wird die Computer unterstützte Herstellung verstanden, die von dreidimensionalen Datensätzen ausgeht.

Durch diesen sogenannten Gingivateller können auch in einem feuchten und blutenden Operationsgebiet die notwendigen Messdaten gewonnen werden.

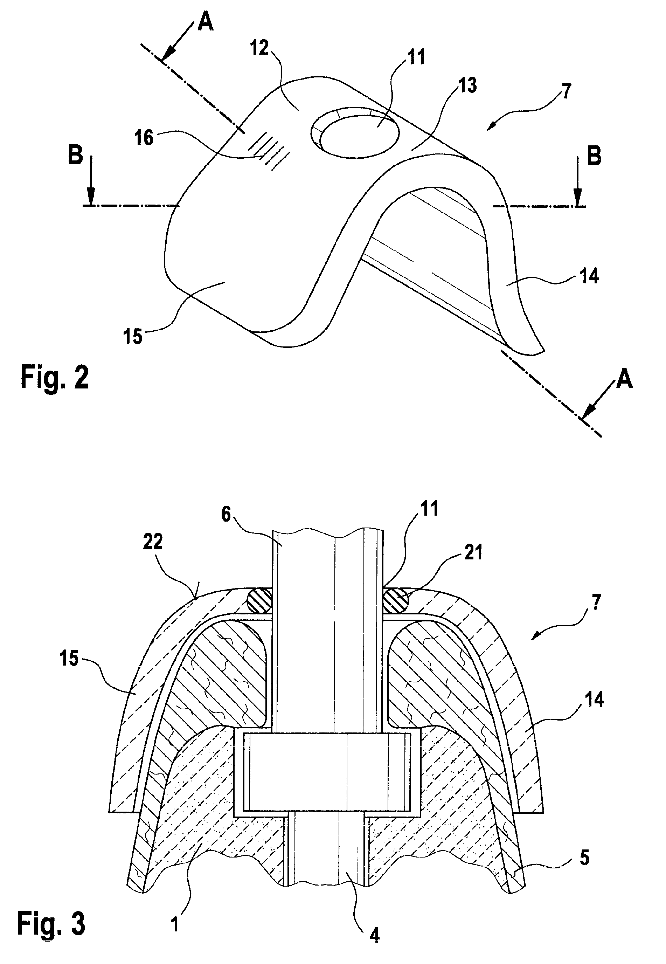

In Fig. 2 ist ein Ausgleichsteil 7 in einer perspektivischen Ansicht dargestellt, aus der sich eine dem Kieferquerschnitt folgende Sattelform entnehmen lässt. Dabei verfügt das Ausgleichsteil 7 über eine zentrale Öffnung 11 und dazu benachbart über Auflageflächen 12, 13, die sich dem Kieferquerschnitt zumindest näherungsweise anpassen. Über eine Kennung 16 lässt sich die Lage und Orientierung des Ausgleichsteils während der Vermessung erfassen.

Sind die dem zu versorgenden Implantat 4 benachbarten Zähne 2, 3 weiter entfernt, kann das Ausgleichsteil 7 unter Berücksichtigung der anatomischen Gegebenheiten des Kieferbogens noch in Längsrichtung, das heißt in Richtung des Schnittlinie AA gekrümmt sein.

Seitenflächen 14, 15 dienen der seitlichen Abstützung des Ausgleichsteils 7 am Kiefer, wie aus Fig. 3 ersichtlich ist. Es ist jedoch auch möglich, das Ausgleichsteil 7 z. B. tellerartig zu gestalten und die Anpassung an die Geometrie der Präparationsstelle erst durch die Verformung des Tellers vor Ort herzustellen.

Aufgrund der vergrößerten Darstellung lässt sich ebenfalls erkennen, dass im Bereich der Öffnung 11 am Ausgleichsteil 7 eine das Aufsatzteil 6 umschließende Dichtung 21 angeordnet ist die verhindert, dass Blut und Speichel aus dem Zahnfleisch 5 auf die Oberseite 22 des Ausgleichsteils 7 gelangt.

Im Zusammenhang mit der CAD/CAM gestützten Herstellung von Suprastrukturen erfolgt zunächst die Befestigung des mit dem Ausgleichteil 7 versehenen Aufsatzstücks 6 am Implantat 4 und anschließend die Verschiebung des Ausgleichsteils 7 auf das Niveau der Gingiva (Zahnfleisch). Anschließend erfolgt die Vermessung mit der Herstellung eines dreidimensionalen Datensatzes. Für die Konstruktion der Suprastruktur wird die zervikale Bestimmungslinie eines Büchereizahns in mesio-distaler Richtung leicht unter das Niveau gelegt, das durch das Ausgleichteil 7 gegeben ist.

Dies kann sowohl unmittelbar nach Einbringung des Implantats in die Präparationsstelle als auch nach erfolgreicher Einheilung durchgeführt werden.

Das Ausgleichsteil 7 ist vorzugsweise mit einem Material beschichtet, das einen hohen Rückstreukoeffizienten mit einer Lambert'schen Streuverteilung sowohl im sichtbaren wie im nahen Infrarot-Bereich des Spektrums aufweist. Dadurch wird das Vermessen nach dem Prinzip des aufprojizierten Gitters mit Triangulation begünstigt.

## Patentansprüche

1. Ausgleichsteil für die Vermessung von Zahnrestaurationen mit einem auf ein in einem Kiefer eingebrachtes Implantat (4) oder auf ein in einem Arbeitsmodell vorgesehenes Manipulierimplantat befestigten Aufsatzteil (6), **dadurch gekennzeichnet, dass** das Ausgleichsteil (7) eine das Aufsatzteil (6) umfangsseitig umschließende Öffnung (11) aufweist und dass sich von der Öffnung (11) weg erstreckende Auflageflächen (12, 13) zur Auflage auf dem die Zahnrestauration umgebenden Zahnfleisch (5) vorgesehen sind.

2. Ausgleichsteil nach Anspruch 1, **dadurch gekennzeichnet, dass** der Rand der Öffnung (11) als Dichtung (21) ausgebildet ist oder dass an der Öffnung eine Dichtung angeordnet ist.

3. Ausgleichsteil nach Anspruch 1 oder 2 **dadurch gekennzeichnet, dass** der Rand der Öffnung (21) so ausgebildet ist, dass eine Verschiebung des Ausgleichsteils entlang des und/oder eine Verdrehung gegenüber dem Aufsatzteil (6) ermöglicht ist.

4. Ausgleichsteil nach Anspruch 3, **dadurch gekennzeichnet, dass** eine Kennung (16) vorhanden ist, die eine Bestimmung der Orientierung des Ausgleichsteils (7) bezüglich des Aufsatzteils (6) ermöglicht.

5. Ausgleichsteil nach einem der Ansprüche 1 bis 4, **dadurch gekennzeichnet, dass** die dem Kiefer abgewandte Oberfläche einen hohen Rückstreukoeffizienten mit einer Lambert'schen Streuverteilung sowohl im sichtbaren wie im nahen Infrarotbereich des Spektrums aufweist.

6. Ausgleichsteil nach Anspruch 5, **dadurch gekennzeichnet, dass** die Oberfläche beschichtet ist.

7. Verfahren zur Vermessung von einem in einem Kiefer eingebrachten Implantat oder von einem in einem Arbeitsmodell vorgesehenen Manipulierimplantat, wobei an dem Implantat (4) ein Aufsatzteil (6) positioniert und befestigt ist, wobei das Aufsatzteil (6) die Lage des Implantates (4) im Kieferbereich wiedergibt, **dadurch gekennzeichnet, dass** ein am Aufsatzteil (6) beweglich angeordnetes Ausgleichsteil (7) auf das Niveau des Zahnfleischs (5) ausgerichtet wird und dass die Erstellung eines dreidimensionalen Datensatzes unter Berücksichtigung des derartig ausgerichteten Ausgleichsteils (7) erfolgt.

8. Aufsatzteil auf ein in einem Kiefer eingebrachtes Implantat (4) oder ein in einem Arbeitsmodell vorgesehenes Manipulierimplantat, wobei das Aufsatzteil (6) mit einer Positionierungsvorrichtung (6.2) und mit Befestigungsmitteln zum Implantat (4) hin und weiterhin mit einem Teilbereich (6.1), der in seiner Struktur und/oder Codierung bekannt ist, **dadurch gekennzeichnet, dass** zwischen der Positionierungsvorrichtung (6.2) und dem Teilbereich (6.1) ein Distanzstück (6.3) vorgesehen ist, dessen Länge so bemessen ist, dass ein Ausgleichsteil (7) nach einem der Ansprüche 1 bis 6 auf das Niveau des Zahnfleisches (5) von Nachbarzähnen (2, 3) gebracht ist.
